(19)

Europäisches
Patentamt
European
Patent Office
Office européen
des brevets

(11) **EP 4 621 734 A1**

(12) **EUROPEAN PATENT APPLICATION**

(43) Date of publication:
**24.09.2025 Bulletin 2025/39**

(51) International Patent Classification (IPC):
**G06V 10/764** (2022.01)   **G06T 7/00** (2017.01)
**G06V 10/774** (2022.01)   **G06V 10/82** (2022.01)
**G06V 10/98** (2022.01)

(21) Application number: **25164361.5**

(22) Date of filing: **18.03.2025**

(52) Cooperative Patent Classification (CPC):
**G06V 10/774; G06T 7/0004; G06V 10/764;**
**G06V 10/82; G06V 10/98; G06V 10/993;**
G06T 2207/10024; G06T 2207/20081;
G06T 2207/20084; G06T 2207/30144

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.03.2024 IT 202400006112**

(71) Applicant: **Emarc S.r.l.**
**21047 Saronno (VA) (IT)**

(72) Inventors:
• **BELTRAMELLI, Lorenzo**
**22100 COMO (CO) (IT)**
• **BANFI, Federico**
**21047 SARONNO (VA) (IT)**

(74) Representative: **Pezzoli, Ennio et al**
c/o Maccalli & Pezzoli S.r.l.
**Via Settembrini 40**
**20124 Milano (IT)**

(54) **MONITORING DIGITAL PRINTING PROCESSES BY MEANS OF NEURAL NETWORK**

(57)    A method for training a neural network model **(320)** for use in print defect monitoring applications in a substrate printing process. The method comprises, under the control of a computing system **(180)**: - providing **(630)** to the computing system a plurality of digital images to be printed; - providing **(626)** to the computing system one or more substrate digital images each representative of a corresponding substrate; - generating **(650),** by the computing system, a plurality of first training images representative of defect-free prints, said generating the first training images comprising combining **(668)** each of a group of said digital images to be printed with one of the substrate digital images; - generating **(650),** by the computing system, a plurality of second training images representing prints each containing at least one print defect, said generating the second training images comprising carrying out the following operations a), b) on each of a group of said digital images to be printed: a) digitally manipulating **(660)** said digital image to be printed to introduce into it at least one graphic alteration representing the corresponding at least one print defect; b) combining **(668)** the digitally manipulated digital image to be printed with one of the substrate digital images; - training **(604),** by the computing system, said neural network model on the basis of said first training images and said second training images to optimize the capability of said neural network model to classify the first training images as defect-free, and to classify the second training images as containing at least one defect.

Figure 6A

EP 4 621 734 A1

## Description

### Background of the present invention

#### Field of the present invention

The present invention relates generally to the field of image analysis, and more specifically to the use of image analysis for monitoring digital printing processes.

#### Background of related technique

By digital printing process, it is meant a process that allows printing a digital image onto a substrate without the use of printing plates. Digital printing processes can be used in a variety of application fields, using a variety of different substrates, such as paper, cardboard, fabrics, wood, metal, glass.

Quality control is of strategic importance in the digital printing field, and its ultimate goal is to prevent the placing on the market of final products that do not meet specific quality standards. The quality of the final product (hereinafter, print product or simply print) strongly depends on the presence/absence of print defects that may have formed during the printing operations. Identifying the presence of print defects in the print product as early as possible is particularly important to ensure the possibility of stopping the printing process (and tracing the problem that gave rise to the print defects) in a time sufficiently rapid to reduce the waste of energy, inks, and substrate as much as possible.

Inspection of print products for print defects is a difficult, time-consuming and resource-intensive procedure. For example, in the field of digital printing on textile substrates, where digital images are printed on substrates including fabrics, such an inspection may require highly trained personnel to perform complicated and detailed analyses on even very large portions of printed fabrics.

Thanks to the ever-increasing diffusion of neural networks in the most diverse industrial fields, in recent times the possibility of exploiting the potential of such neural networks to support or even replace qualified personnel during the execution of inspections on print products has begun to be evaluated.

Neural networks, in fact, are a computer tool that is increasingly used in all those sectors that can benefit from the automatic image analysis capabilities offered by this tool. In particular, a monitoring system that uses a neural network model trained to detect the presence of potential print defects in images of print products collected during printing operations could advantageously replace the long and complex work of manual inspection by qualified personnel, and provide real-time results during printing operations.

### Summary of the present invention

The Applicant found that training a neural network to be used in a digital printing system monitoring system to detect the presence of print defects is a very critical operation.

In fact, in order to effectively train a robust neural network capable of detecting the presence of print defects in a digital printing process, it is necessary to set up a complete training database, including a large amount of training images of different types, concerning different types of printing, different types of substrates and different types of print defects. However, the generation of such a training database requires long and inefficient manual operations for the acquisition (for example, by camera) of images of printing process results. Such manual operations would require an excessive amount of time, and a corresponding consumption of electricity and inks, since, given the rarity of the occurrence of print defects in real cases, it would be necessary to collect countless images by acquiring printing results of printing processes for very large time intervals.

In light of the above, the Applicant has devised a method and system that solve the above-mentioned problem.

In general terms, the present invention is based on the idea of training the neural network by exploiting (also) training images that have been digitally manipulated in order to introduce print defects into them.

In particular, an aspect of the present invention relates to a method for training a neural network model for use in print defect monitoring applications in a substrate printing process. The method comprises, under the control of a computing system, providing to the computing system a plurality of digital images to be printed. The method further comprises providing to the computing system one or more substrate digital images each representative of a corresponding substrate. The method comprises generating, by the computing system, a plurality of first training images representative of defect-free prints. Said generating the first training images comprises combining each of a group of said digital images to be printed with one of the substrate digital images. The method comprises generating, by the computing system, a plurality of second training images representing prints each containing at least one print defect. Said generating the second training images comprises carrying out the following operations a), b) on each of a group of said digital images to be printed: a) digitally manipulating said digital image to be printed to introduce into it at least one graphic alteration representing the corresponding at least one print defect; b) combining the digitally manipulated digital image to be printed with one of the substrate digital images. The method comprises training, by the computing system, said neural network model on the basis of said first training images and said second training images to optimize the capability of said neural network model to classify the first training images as defect-free, and to classify the second training images as containing at least one defect.

Thanks to this method of generating training images, it is advantageously possible to rapidly build a complete and efficient training database, which allows the training of one or more robust neural networks without having to first perform long and inefficient manual operations that would be necessary if one wanted to build such a training database using only digital images obtained from the acquisition of results of real printing processes.

Through digital manipulation it is advantageously possible to "synthetically" generate (i.e. by introducing artefacts performed using digital manipulations) various types of print defects, consequently generating a training database that guarantees excellent coverage of the numerous cases that can occur during digital printing operations.

According to an embodiment of the present invention, said digitally manipulating said digital image to be printed to introduce into it at least one graphic alteration representing the corresponding at least one print defect comprises superimposing onto said digital image to be printed at least one image representative of a stain. In this way, it is advantageously possible to faithfully replicate a stain defect.

According to an embodiment of the present invention, said digitally manipulating said digital image to be printed to introduce into it at least one graphic alteration representing the corresponding at least one print defect comprises blurring said digital image using a blurring algorithm. In this way, it is advantageously possible to faithfully replicate a blur defect.

According to an embodiment of the present invention, said digitally manipulating said digital image to be printed to introduce into it at least one graphic alteration representing the corresponding at least one print defect comprises dividing said digital image into a first portion and a second portion, and moving the first portion so as to overlap it at least partially with the second portion, or so as to create a gap between the first portion and the second portion. In this way, it is advantageously possible to faithfully replicate a step defect.

According to an embodiment of the present invention, said digital images to be printed comprise repetitive digital images to be printed each comprising a plurality of copies of a same single image.

According to an embodiment of the present invention, said digitally manipulating said digital image to be printed to introduce into it at least one graphic alteration includes altering, in each of said repetitive digital images to be printed, the position of at least one of said copies with respect to the position of the other copies. In this way, it is advantageously possible to faithfully replicate an incorrect repeat defect.

According to an embodiment of the present invention, the method further comprises, under the control of the computing system, extracting from each digital image to be printed corresponding color channels.

According to an embodiment of the present invention, said operation a) includes digitally manipulating each color channel of said digital image to be printed to introduce into it at least one graphic alteration representing the corresponding at least one print defect.

According to an embodiment of the present invention, said operation a) includes combining the digitally manipulated color channels together to obtain the corresponding digitally manipulated digital image to be printed.

According to an embodiment of the present invention, said digitally manipulating said digital image to be printed to introduce at least one graphic alteration into it comprises erasing a corresponding set of pixels from at least one color channel of said digital image to be printed. In this way, it is advantageously possible to faithfully replicate a line defect.

According to an embodiment of the present invention, said digitally manipulating said digital image to be printed to introduce at least one graphic alteration into it comprises translating one or more of the color channels of said digital image to be printed with respect to the other color channels of said image so as to create a misalignment between said one or more of the color channels and said other color channels. In this way, it is advantageously possible to faithfully replicate a color misalignment defect.

According to an embodiment of the present invention, said method comprises, under the control of the computing system, scaling said digital images to be printed to a first resolution corresponding to a printing resolution used for printing said digital images to be printed on a substrate.

According to an embodiment of the present invention, said method comprises, under the control of the computing system, generating said first training images and said second training images using said digital images to be printed scaled to said first resolution. In this way, the synthetic generation of print defects is carried out at the same resolution used for the actual print, increasing its faithfulness.

According to an embodiment of the present invention, said method comprises, under the control of the computing system, scaling said first training images and said second training images generated to a second resolution, said training said neural network model being executed, by the computing system, on the basis of said first training images and said second training images at the second resolution.

According to an embodiment of the present invention, said at least one print defect includes a single type of print defect.

According to an embodiment of the present invention, said first training images comprise a first number of first training images.

According to an embodiment of the present invention, said second training images comprise a second number of second training images representative of prints each containing at least one print defect of said single type of print defect.

According to an embodiment of the present invention, said first number corresponds to 40%-60% of a total number of training images used by the computing system for training said neural network model.

According to an embodiment of the present invention, said at least one print defect includes a plurality of different types of print defects.

According to an embodiment of the present invention, said first training images comprise a first number of first training images.

According to an embodiment of the present invention, said second training images comprise for each type of print defect of said plurality a corresponding second number of second training images representative of prints each containing at least one print defect of said type of print defect.

According to an embodiment of the present invention, said first number and said second numbers are substantially the same.

According to an embodiment of the present invention, said training, by the computing system, said neural network model further comprises including in said first training images digital images corresponding to camera acquisitions of images of prints free of print defects.

According to an embodiment of the present invention, said training, by the computing system, said neural network model further comprises including in said second training images digital images corresponding to camera acquisitions of images of prints containing at least one print defect.

An additional aspect involves a computer program to implement the training method.

A further aspect includes a corresponding computer program product.

An additional aspect involves a computational system to implement the training method.

Another aspect of the present invention relates to a method for monitoring print defects in a substrate printing process. The method comprises: receiving, by a monitoring computing system, an image of a printing product obtained by means of a substrate printing process, said image being acquired by means of one or more image acquisition sensors; using, by the monitoring computing system, a neural network model trained to classify said acquired image; evaluating, by the monitoring computing system, the presence of print defects in the printing product on the basis of a classification of said acquired image carried out by means of said neural network model; providing as output an outcome of said evaluation.

According with an embodiment of the present invention, said providing as output an outcome of said evaluation comprises displaying a message based on the classification of the acquired image.

According with an embodiment of the present invention, said providing as output an outcome of said evaluation comprises issuing a warning indicative of the presence of print defects if the classification of the acquired image corresponds to the presence of a print defect.

According with an embodiment of the present invention, said providing as output an outcome of said evaluation comprises controlling the stopping of the printing process if the classification of the acquired image corresponds to the presence of a print defect.

An additional aspect includes a computer program to implement the monitoring method.

A further aspect includes a corresponding computer program product.

An additional aspect includes a computational system to implement the monitoring method.

One or more aspects of the present invention are set forth in the independent claims, with advantageous features of the same invention being set forth in the dependent claims, the wording of which is herein incorporated verbatim by reference (with any advantageous feature being intended with reference to a specific aspect thereof which applies mutatis mutandis to any other aspect thereof).

## Brief description of the drawings

These and other features and advantages of the present invention will appear more clearly by reading the following detailed description of exemplary and non-limitative embodiments thereof. For its better intelligibility, the following description should be read with reference to the attached drawings, in which:

Figure 1 is a schematic view of a digital printing system in which concepts in accordance with embodiments of the present invention may be applied;

Figure 2 shows units included in a monitoring computing system and a configuration computing system in accordance with an embodiment of the present invention;

Figure 3 illustrates main software components that can be used for a print defect monitoring method performed by the monitoring computing system in a printing process in accordance with an embodiment of the present invention;

Figure 4 illustrates main software components that can be used for a training method performed by the configuration computing system for training a neural network used from the monitoring computing system in accordance with an embodiment of the present invention;

Figure 5 is a block diagram illustrating the operations performed by the monitoring computing system related to a method of monitoring print defects in a printing process in accordance with an embodiment of the present invention;

Figures 6A-6D show block diagrams illustrating procedures and operations performed by the configuration computing system related to a method for training the neural network used by the monitoring computing system in accordance with an embodiment of the present invention;

**Figure 7** illustrates some images used to experimentally verify the accuracy of a neural network trained using a training method in accordance with embodiments of the present invention.

## Detailed description of exemplary and non-limitative embodiments of the present invention

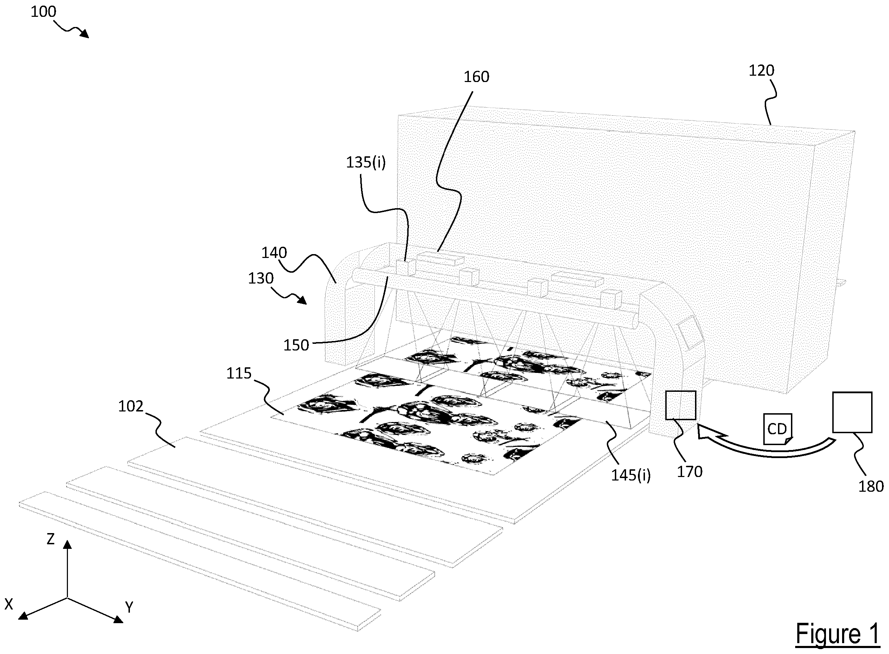

Referring to the drawings, **Figure 1** is a schematic view of a digital printing system **100** in which concepts in accordance with embodiments of the present invention may be applied.

The digital printing system **100** illustrated in **Figure 1,** and described in detail in the following of this description, is a digital printing system for textile applications configured to perform digital prints on substrates comprising fabrics. In any case, it is emphasized that the concepts of the present invention can also be applied to other types of digital printing systems, in which the digital prints are performed on substrates of a different type, such as for example comprising paper, cardboard, wood, plastic, metal, PVC, film.

In accordance with an embodiment of the present invention, the digital printing system **100** is a digital printing system of the so-called "multi-step" or "scanner" type, wherein printing is performed incrementally through a sequence of printing steps wherein at each step a respective portion of a digital image is printed on a corresponding portion of the substrate. The generic printing step provides for a portion of a digital image to be printed by one or more movable print heads that print by moving along a first direction in correspondence with a respective portion (generally a strip) of the substrate. Once this portion has been printed, the substrate is translated along a second direction perpendicular to the first direction. The next printing step is then performed by printing a further portion of the digital image in correspondence with a respective further portion of the substrate (generally, adjacent to the portion printed in the previous printing step).

In accordance with one embodiment of the present invention, the digital printing system **100** includes a conveyor belt **102** that defines a flat support structure for transporting a substrate **115** (e.g., a textile element) on which to perform the digital printing.

In accordance with an embodiment of the present invention, the conveyor belt **102** is configured to be moved along a first direction **X** (by means of suitable movement systems not illustrated) so as to allow a controlled translation of the substrate **115** along the first direction **X.**

In accordance with an embodiment of the present invention, the digital printing system **100** comprises a printing module **120** equipped with one or more print heads (not illustrated) adapted to print portions of a digital image on respective portions of the substrate **115** which are progressively located in correspondence with the printing module **120** following the translation of the substrate **115** along the first direction **X.** Without going into implementation details well known to those skilled in the art, in accordance with an embodiment of the present invention, each print head comprises a plurality of nozzles (for example, with a diameter of a few tens of microns) electronically controlled for the precise expulsion of ink drops, and is controlled to translate (forward and backward) along a second direction **Y** perpendicular to the first direction **X.**

In accordance with one embodiment of the present invention, the area of the substrate **115** is conceptually divided into a grid of small elementary cells (e.g., squares) each of which is potentially intended to receive a respective drop of ink from one of the nozzles of the print head.

In accordance with one embodiment of the present invention, the printing module **120** comprises a processing system configured to process the digital image to be printed in order to identify the elementary cells to be hit with ink to print the digital image. In accordance with one embodiment of the present invention, the printing module **120** comprises a control and actuation system configured to translate the print heads along the second direction **Y** while staying a few millimeters above the substrate **115** (without directly contacting the latter) and to drive the selective delivery of ink drops by the nozzles towards selected elementary cells of the substrate in accordance with the processed digital image. In this way, a portion (strip) of the substrate **115** is selectively soaked with the dispensed ink, thus printing a corresponding portion of the digital image. At this point, the substrate **115** is translated by the conveyor belt **102** along the first direction **X** to allow the printing of a further portion of the digital image on a new portion of the substrate **115.**

In accordance with a further embodiment of the present invention, the processing of the digital image to be printed may be performed by a computing system separate from (e.g., remote from) the printing module **120.** In this case, the printing module **120** has only the task of moving the print heads and controlling the selective delivery of ink from the nozzles of the heads according to the processing of the digital image.

Although the digital printing system **100** described is a "multi-step" type printing system, it is emphasized that the concepts of the present invention can still be applied to single-step digital printing systems **100,** where the digital image is printed onto the substrate in a single step.

In the case of color printing, the digital image comprises a plurality of overlapping color channels. Each color channel is a version of the digital image comprising only the color contribution of the channel to the final digital image. Each color channel corresponds to one of the primary colors of the printing module **120** (e.g., using the CMYK color scheme, a cyan color channel, a magenta color channel, a yellow color channel, and a black color channel). In this case, the overall image is printed by making multiple successive overlapping prints of each color channel, each made using the corresponding color ink.

The digital printing system **100** is a very complex system, which has to manage a large number of variables and parameters very precisely. Consequently, the print defects that can affect the printing results can be of very different types and nature. An exemplary and non-exhaustive list of such print defects is given below.

*Line defect:* This print defect involves the formation of one or more unwanted lines extending along the direction **X.** These lines are caused by one or more nozzles of one or more print heads failing to deliver ink, for example because those nozzles are clogged.

*Color Misalignment Defect:* This defect involves inconsistencies on the edges of shapes represented in printed output. These inconsistencies are due to incorrect overlapping of color channels.

*Stain defect:* This defect involves the presence of unwanted stains, caused by dripping substances (e.g. water or ink) onto the substrate.

*Blur defect:* This defect involves the printed design or at least part of it being blurry, for example due to inappropriate chemical treatment of the substrate.

*Incorrect Repeat Defect:* This defect occurs when in a design involving repeating copies of the same single image, the position of at least one of the copies is not repeated correctly (for example, with a different ratio or relative position with respect to the other copies).

*Step defect:* This defect, typical of "multi-step" printing systems, involves the presence of overlapping portions of the image or the presence of unprinted lines along the direction **Y.** This defect can be caused, for example, by incorrect movement (for example, insufficient or excessive extension) of the conveyor belt that transports the support along the direction **X.**

In accordance with an embodiment of the present invention, the digital printing system **100** includes a monitoring unit **130** configured to monitor the results of the prints made by the printing module **120** by evaluating the presence (or absence) of print defects in the substrate portion **115** on which the printing module **120** has performed printing operations.

In accordance with one embodiment of the present invention, the monitoring unit **130** comprises one or more image acquisition sensors **135(i)** (e.g., cameras) disposed in proximity to the conveyor belt **102** downstream of the printing module **120** so as to acquire images (of portions) of the substrate **115** on which the printing module **120** has performed printing operations.

In accordance with an embodiment of the present invention, the image acquisition sensors **135(i)** (four, in the figure) are installed on a bridge-shaped support structure **140** that crosses the conveyor belt **102** along the direction **Y,** allowing each image acquisition sensor **135(i)** to frame from above (with respect to a direction **Z** perpendicular to the directions **X** and **Y**) a respective portion **145(i)** of the substrate **115** on which the printing module **120** has carried out printing operations. The concepts of the present invention can however also be directly applied to cases in which the image acquisition sensors **135(i)** are installed in different positions, for example located on the sides of the conveyor belt **102.**

In accordance with one embodiment of the present invention, the monitoring unit **130** is advantageously equipped with one or more illumination devices **150** (only one is illustrated in the figure) configured to illuminate the portions **145(i)** of the substrate **115** framed by the image acquisition sensors.

In accordance with one embodiment of the present invention, the monitoring unit **130** further includes one or more acquisition control modules **160** comprising control electronics for the image acquisition sensors **135(i).**

In accordance with one embodiment of the present invention, the monitoring unit **130** further comprises a monitoring computing system **170** configured to evaluate the presence of print defects in the substrate portion **115** on which the printing module **120** has performed printing operations based on images *P(i)* acquired by the image acquisition sensors **135(i).**

In accordance with an embodiment of the present invention, the monitoring computing system **170** is configured to use a machine learning model, and in particular a neural network model, to classify the images *P(i)* acquired by the image acquisition sensors **135(i)** and evaluate the presence of print defects on the substrate **115** based on such classification.

In accordance with an embodiment of the present invention, and as will be described in more detail below, the neural network used by the tracking computing system **170** is configured to classify each of the acquired images *P(i)* into a selected one of a set of predefined classes *C(j)*. In accordance with an embodiment of the present invention, said set of predefined classes *C(j)* comprises a class *C(0)* indicative of an absence of print defects and one or more classes *C(1)* , *C(2),* ... each indicative of the presence of a corresponding type of print defect.

A non-limiting example of predefined classes *C(j)* can be the following:

> *C(0)* : no print defects;
> *C(1)* : presence of at least one line defect;
> *C(2)* : presence of at least one color misalignment defect;
> *C(3)* : presence of at least one stain defect;
> *C(4)* : presence of at least one blur defect;
> *C(5)* : presence of at least one incorrect repeat defect;
> *C(6)* : presence of at least one step defect.

In accordance with an embodiment of the present invention, the monitoring computing system **170** is configured to signal, for example via a respective message displayed via a display unit of the monitoring computing system **170,** an acoustic signal, and/or the automatic sending of an alarm notification to a remote terminal, the presence of print defects on the printed substrate **115** if at least one of the images *P(i)* acquired by the image acquisition sensors **135(i)** has been classified as belonging to one of the predefined classes *C(j)* corresponding to a print defect.

In this way, as soon as the monitoring system **170** has identified the presence of at least one print defect because an image *P(i)* has been classified as belonging to one of the predefined classes *C(j)* corresponding to a print defect, it is possible to act promptly, for example by stopping the digital printing system **100,** thus avoiding further waste of materials (substrate and inks) and electrical energy. Once the digital printing system **100** has been stopped, it is then possible to carry out an inspection of the components of the digital printing system **100** and intervene to fix what caused the print defect. The identification of the cause of the print defect is advantageously carried out taking into account the specific class (and therefore the specific print defect) in which the image *P(i)* has been classified. In accordance with an embodiment of the present invention, the same monitoring computing system **170** can be configured to automatically stop the digital printing system **100** following the identification of at least one print defect.

In accordance with one embodiment of the present invention, the configuration of the neural network used by the monitoring computing system **170** is determined by corresponding configuration data **CD** that have been generated by a configuration computing system **180.** In accordance with one embodiment of the present invention, the configuration computing system **180** is distinct from the monitoring computing system **170.**

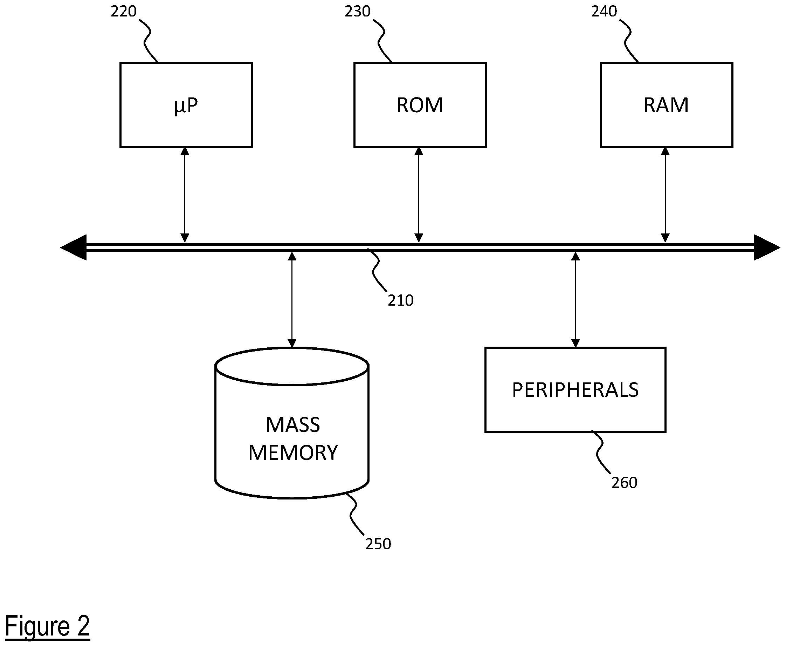

Referring to **Figure 2,** each of the monitoring/-configuration computing systems **170** and **180** comprises several units that are connected to each other through a bus structure **210.** In particular, a microprocessor **220,** or more, provides logic capability of the monitoring/configuration computing systems **170, 180.** A nonvolatile memory (ROM) **230** stores basic code for bootstrapping the monitoring/configuration computing systems **170, 180** and a volatile memory (RAM) **240** is used as working memory by the microprocessor **220.** The monitoring/configuration computing system **170, 180** is equipped with a mass memory **250** for storing programs and data, for example, a solid state disk drive (SSD). Furthermore, the monitoring/configuration computing system **170, 180** comprises a number of controllers **260** for peripheral units, or Input/Output units, such as keyboards, display devices, network adapters, drives for reading/writing removable data storage units. The monitoring system **170** is also equipped with suitable driver units for modules of the monitoring unit **130.**

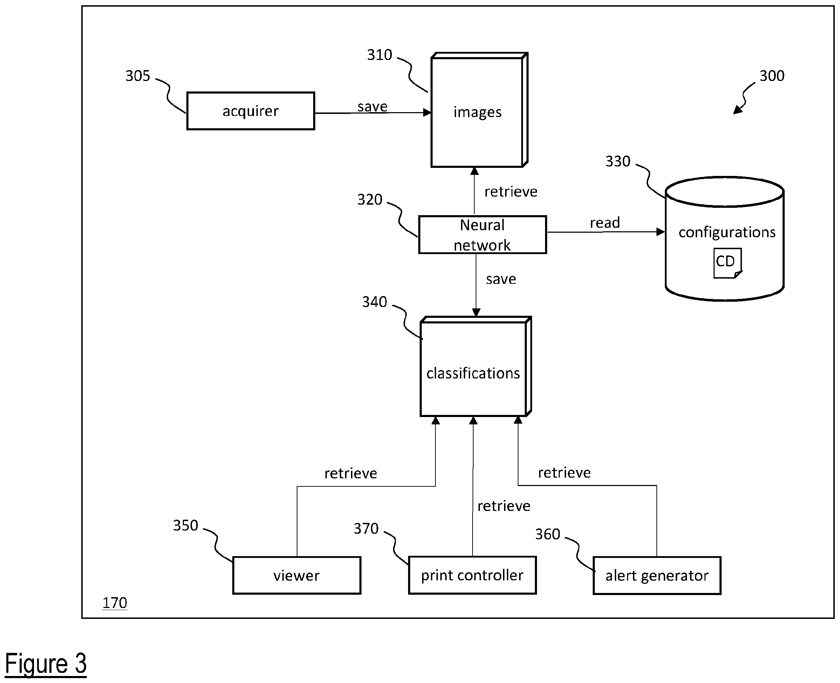

Referring to **Figure 3,** main software components are shown that can be used for a print defect monitoring method performed by the monitoring computing system **170** in a printing process in accordance with an embodiment of the present invention.

All software components (programs and data) are identified as a whole with the reference **300.** The software components **300** are typically stored in the mass memory of the monitoring computing system **170** and loaded (at least in part) into the working memory of the monitoring computing system **170** when the programs are running, together with an operating system and other application programs not directly relevant to the solution of the present disclosure (and therefore not shown in the figure for simplicity and clarity). The programs are initially installed in the mass memory, for example by means of removable storage devices or from the network. Each program may be or comprise a module, segment or portion of code, which comprises one or more executable instructions to implement the specified logical function.

In accordance with one embodiment of the present invention, an image acquirer **305** drives the acquisition control modules **160** of the monitoring unit **130** (see **Figure 1)** to control the acquisition of images *P(i)* of the substrate **115** by the image acquisition sensors **135(i)** during the printing operations.

In accordance with one embodiment of the present invention, the image acquirer **305** saves in a memory variable **310** an image *P(i)* (defined by a matrix of pixels) that is acquired during printing operations.

In accordance with a further embodiment of the present invention (not illustrated), the image acquirer **305** may additionally write access a database of acquired images to store in such database one or more of the *(e.g.,* most recent) acquired images *P(i).* In accordance with an embodiment of the present invention, the acquired image database **310** has an entry for each acquired image *P(i).*

In accordance with one embodiment of the present invention, a machine learning model is used to classify images *P(i)* into corresponding predefined classes *C(j)* by applying machine learning techniques. In short, machine learning is used to perform a specific task (in this case, image classification) without using explicit instructions but by automatically inferring how to do it from examples (by exploiting a corresponding model that has been learned from them). In the specific implementation in question, a deep learning technique is applied, which is a branch of machine learning based on neural networks. In accordance with one embodiment of the present invention, the machine learning model is a neural network **320.**

The neural network **320** is a data processing system that approximates the functioning of the human brain. The neural network **320** comprises basic processing elements (neurons), which perform operations based on corresponding weights. The neurons are connected via one-way channels (synapses), which transfer data between them. The neurons are organized into layers that perform different operations.

In accordance with an embodiment of the present invention, the neural network **320** comprises at least one input layer for receiving the input to the neural network **320** in the form of data representing an acquired image *P(i)*. The neural network **320** further comprises an output layer to provide the output of the neural network **320** in the form of data representing a class selected among the predefined classes *C(j)*. In accordance with an embodiment of the present invention, the output of the neural network **320** is a classification array *CA* which provides an indication of a class selected among the predefined classes *C(j)*. For example, the classification array *CA* provides for each of the predefined classes *C(j)* a corresponding class probability value indicative of the probability that the image *P(i)* represents a reproduction of a portion of the substrate free from print defects (for the class *C(0)*) or comprising at least one print defect of a specific type (for the further classes *C(1)* , *C(2)*, ...).

In accordance with an embodiment of the present invention, the neural network **320** is a convolutional neural network, *i.e.,* a type of neural network comprising one or more convolutional layers that perform (cross) convolution operations. Each convolutional layer performs a convolution operation (in sequence, on portions of the data) through a convolution matrix (called filter or kernel) defined by corresponding weights. The convolution operation is typically followed by further operations, comprising for example a normalization operation to adjust the mean and variance of the data and the application of an activation function to introduce a non-linearity factor. In the case considered, the weights may for example represent a particular visual feature to be searched for.

In accordance with one embodiment of the present invention, in the neural network **320** one or more of the convolutional layers may be followed by a corresponding max-pooling layer configured to perform a sub-sampling procedure in order to allow some degree of translation invariance and to reduce the computational load for subsequent layers.

In accordance with one embodiment of the present invention, the neural network **320** further comprises final layers of the "fully-connected" type, *i.e.,* non-convolutional layers where each output value of the output of a layer is a function of all the input values of the input of that layer. These final layers act as final classifiers having a number of output neurons equal to the number of possible predefined classes *C(j),* so that each output neuron is associated with a specific one among the predefined classes *C(j)*.

In accordance with one embodiment of the present invention, the neural network **320** is configured by read accessing a configuration database **330** containing configuration data **CD** generated by the configuration computing system **180**. Said configuration data **CD** define one or more configurations of the neural network **320**. The configuration database **330** has an entry for each configuration of the neural network **320**. The generic entry stores a corresponding configuration defined by a corresponding specific set of weight values of the neural network **320**.

In accordance with one embodiment of the present invention, the neural network **320** (configured via configuration data **CD** stored in the configuration database **330**) accesses the memory variable **310** (or the acquired image database, if any) to retrieve the acquired image *P(i)* (or, the most recently acquired image in the acquired image database, if any), classifies the acquired image *P(i)* by generating a corresponding classification array *CA,* and saves the classification array *CA* in a memory variable **340.**

In accordance with a further embodiment of the present invention (not illustrated), the neural network **320** may additionally write access a classification database to store the classification array *CA* in that database. In accordance with one embodiment of the present invention, the classification database has an entry for each acquired image *P(i)* stored in the acquired image database. For example, each entry in the classification database **340** stores a link to an entry in the acquired image database **310** where an acquired image *P(i)* is stored and a corresponding classification array *CA* identifying the class to which that acquired image *P(i)* has been assigned by the neural network **320**.

In accordance with one embodiment of the present invention, the software components **300** may further include a viewer **350** that accesses the memory variable **340** (or the classification database, if present), and that drives a display of the monitoring computing system **170** to display a message based on the class that has been assigned to the acquired image *P(i)* by retrieving the classification array *CA* from the memory variable **340** (or from the classification database, if present). For example, if the acquired image *P(i)* has been classified by the neural network **320** into one of the classes *C(1), C(2),* ... corresponding to a print defect, the viewer **350** can drive the display to display a message indicative of the presence of print defects on the printed substrate. Advantageously, the display **350** can also indicate in the message the specific type of the detected print defect, identified on the basis of the specific selected class. If the acquired image *P(i)* has been classified as class *C(0),* and thus the printed substrate is assessed to be free of print defects, the viewer **350** can drive the display to display a message indicative of the absence of print defects on the printed substrate, or alternatively to display no message.

In accordance with one embodiment of the present invention, the software components **300** may further include an alert generator **360** that accesses the memory variable **340** (or the classification database, if present), and that drives one or more peripheral units of the monitoring computing system **170** to issue a warning indicative of the presence of print defects if the class that has been assigned to the acquired image *P(i)* - identified by reading the classification array *CA* retrieved from the memory variable **340** (or from the classification database, if present) - is one of the classes *C(1)* , *C(2)* , ... corresponding to a print defect. For example, the alert generator **360** may drive a device for generating an acoustic warning signal, or may drive a communication device for sending a warning message remotely.

In accordance with one embodiment of the present invention, the software components **300** may further include a print controller **370** that accesses the memory variable **340** (or the classification database, if present), and that automatically drives the stop of the conveyor belt **102** and the printing module **120** if the class that has been assigned to the acquired image *P(i)* - identified by reading the classification array *CA* retrieved from the memory variable **340** (or from the classification database, if present) - is one of the classes *C(1)* , *C(2),* ... corresponding to a print defect.

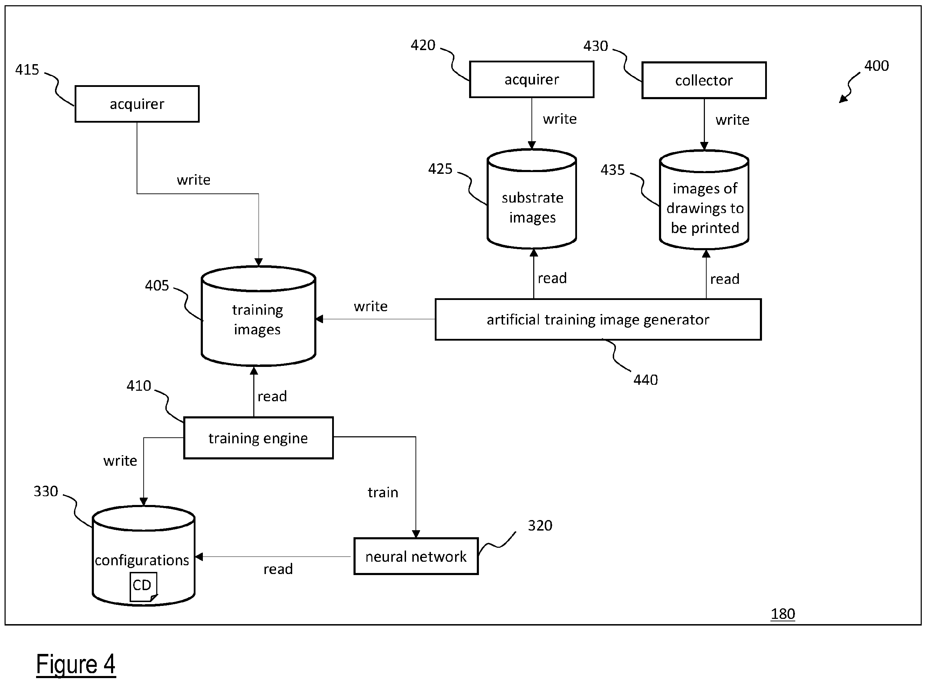

Referring to **Figure 4,** main software components are shown that can be used for a training method performed by the configuration computing system **180** for training the neural network **320** used by the monitoring computing system **170** and generating corresponding configuration data **CD** for such neural network **320** in accordance with an embodiment of the present invention.

All software components (programs and data) are identified as a whole with the reference **400.** The software components **400** are typically stored in the mass memory of the configuration computing system **180** and loaded (at least in part) into the working memory of the configuration computing system **180** when the programs are running, together with an operating system and other application programs not directly relevant to the solution of the present disclosure (and therefore not shown in the figure for simplicity and clarity). The programs are initially installed in the mass memory, for example by means of removable storage devices or from the network. Each program may be or comprise a module, segment or portion of code, which comprises one or more executable instructions to implement the specified logical function.

In accordance with one embodiment of the present invention, a training database **405** stores training images *AP(k)* for training the neural network **320.** In accordance with one embodiment of the present invention, the training database **405** has an entry for each training image *AP(k).* The generic training database **405** entry stores a training image *AP(k),* defined by a pixel matrix, and an indication of the class *C(j)* to which that image belongs.

In accordance with one embodiment of the present invention, a training engine **410** trains a copy of the neural network used by the monitoring system **170,** identified with the same numerical reference **320.** During a training procedure of the neural network **320,** the training engine **410** reads the training database **405** to retrieve the training images *AP(k)* and generate corresponding configuration data **CD** for the neural network **320** (in particular, comprising one or more specific sets of weight values of the neural network **320).** The training engine **410** write accesses a copy of the configuration database used by the monitoring system **170,** identified with the same numerical reference **330,** to store the generated configuration data **CD.**

In accordance with an embodiment of the present invention, the training images *AP(k)* stored in the training database **405** and used by the training engine **410** for training the neural network **320** comprise training images *AP(k)* of two classes, generated in two different ways, namely:

- non-artificial training images *AP(k)* (hereinafter referred to as *APN(k)),* obtained by direct acquisitions (*e.g.*, via camera) of digital images of substrate printing results;
- artificial training images *AP(k)* (hereinafter referred to as *APA(k)),* obtained from digital images of substrates obtained through acquisitions (*e.g.*, by camera) and digital images of drawings to be printed (*e.g.*, obtained by creating the drawings through graphic editors or through camera acquisitions) by applying appropriate combination and/or digital manipulation operations.

In accordance with one embodiment of the present invention, an image acquirer **415** controls the acquisition of the non-artificial training images *APN(k)* and write accesses the training database **405** to store the acquired non-artificial training images *APN(k)* in that database.

In accordance with an embodiment of the present invention, an image acquirer **420** controls the acquisition of substrate digital images *PS(l)* each obtained from an acquisition (e.g. by camera) of one or more portions of a respective substrate (e.g., a particular type of fabric, a particular type of paper, ...).

In accordance with one embodiment of the present invention, the image acquirer **420** write accesses a substrate digital image database **425** to store the acquired substrate digital images *PS(l)* in that database. In accordance with one embodiment of the present invention, the substrate digital image database **425** has an entry for each substrate digital image *PS(l),* which is defined by a matrix of pixels.

In accordance with one embodiment of the present invention, an image collector **430** collects digital images of drawings to be printed *PD(n)* each obtained by creating (and processing) the drawings using graphics editors or by camera acquisitions.

In accordance with one embodiment of the present invention, the image collector **430** write accesses a database **435** of digital images of drawings to be printed to store acquired digital images of drawings to be printed *PD(n)* in that database. In accordance with one embodiment of the present invention, the database **435** of digital images of drawings to be printed has an entry for each digital image of drawing to be printed *PD(n),* which is defined by a matrix of pixels.

In accordance with an embodiment of the present invention, and as will be described in more detail below, an artificial training image generator **440** read accesses databases **425** and **435** to retrieve substrate digital images *PS(l)* and digital images of drawings to be printed *PD(n)* and generate artificial training images *APA(k)* each obtained by combining a respective pair of substrate digital image *PS(l)* and digital image of drawing to be printed *PD(n)* and optionally applying digital manipulation operations.

In accordance with one embodiment of the present invention, the artificial training image generator **440** write accesses the training database **405** to store the generated artificial training images *APA(k)* in that database.

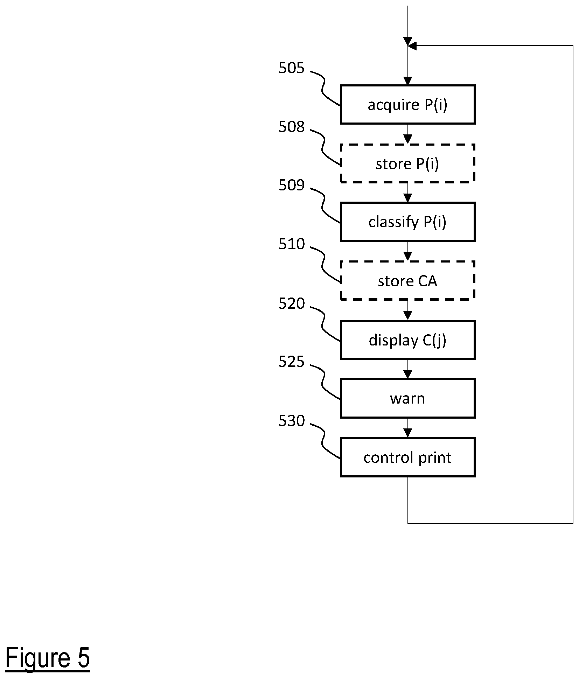

**Figure 5** is a block diagram illustrating the operations performed by the monitoring computing system **170** relating to a method of monitoring print defects in a printing process in accordance with an embodiment of the present invention. Each block may correspond to one or more instructions or procedures executable to implement one or more specific logic functions on components of the monitoring computing system **170** illustrated in **Figure 3**.

The method begins when the digital printing system **100** is activated and the printing module **120** begins printing on the substrate **115**. In accordance with one embodiment of the present invention, the image acquirer **305** begins acquiring an image *P(i)* of the printed substrate (block **505**), saving such acquired image *P(i)* in the memory variable **310**. Optionally, the acquired image *P(i)* may also be stored in the acquired image database, if present (block **508**).

In accordance with an embodiment of the present invention, the neural network **320**, configured with the weights specified in the configuration data **CD** stored in the configuration database **330**, classifies the acquired image *P(i)* into a selected class among the predefined classes *C(j)* by generating a corresponding classification array *CA* (block **509**) and saving such classification array *CA* in the memory variable **340**. Optionally, the classification array *CA* may also be stored in the classification database, if present (block **510**).

In accordance with one embodiment of the present invention, the display **350** accesses the memory variable **340** (or the classification database, if present) to retrieve the classification array *CA* corresponding to the acquired image *P(i)* and drive a display of the monitoring computing system **170** to display a message based on the class that has been assigned to the acquired image *P(i)* (block **520**), *e.g.,* a message specifying the class *C(j)* into which the acquired image *P(i)* has been classified.

In accordance with one embodiment of the present invention, the alert generator **360** accesses the memory variable **340** (or the classification database, if present) to retrieve the classification array *CA* corresponding to the acquired image *P(i)* and drive one or more peripheral units of the monitoring computing system **170** to issue a warning indicating the presence of print defects if the class that has been assigned to the acquired image *P(i)* - identified by reading the classification array *CA* retrieved from the memory variable **340** (or from the classification database, if present) - is one of the classes *C(1)* , *C(2)* , ... corresponding to the presence of a print defect (block **525**).

In accordance with one embodiment of the present invention, the print controller **370** accesses the memory variable **340** (or the classification database, if present) to retrieve the classification array *CA* corresponding to the acquired image *P(i)* and drive the stop of the conveyor belt **102** and the printing module **120** if the class that has been assigned to the acquired image *P(i)* - identified by reading the classification array *CA* retrieved from the memory variable **340** (or from the classification database, if present) - is one of the classes *C(1)* , *C(2),* ... corresponding to a print defect (block **530**).

In accordance with one embodiment of the present invention, the flow of operations then returns to block **505**, with the acquisition of a new image *P(i)* of the printed substrate.

It is emphasized that the concepts of the present invention also apply in the case where only a subset of the assembly comprising the display **350**, the alert generator **360**, and the print controller **370** access the memory variable **340** to perform the respective operations **520**, **525**, and **530** *(e.g.,* only the display **350**).

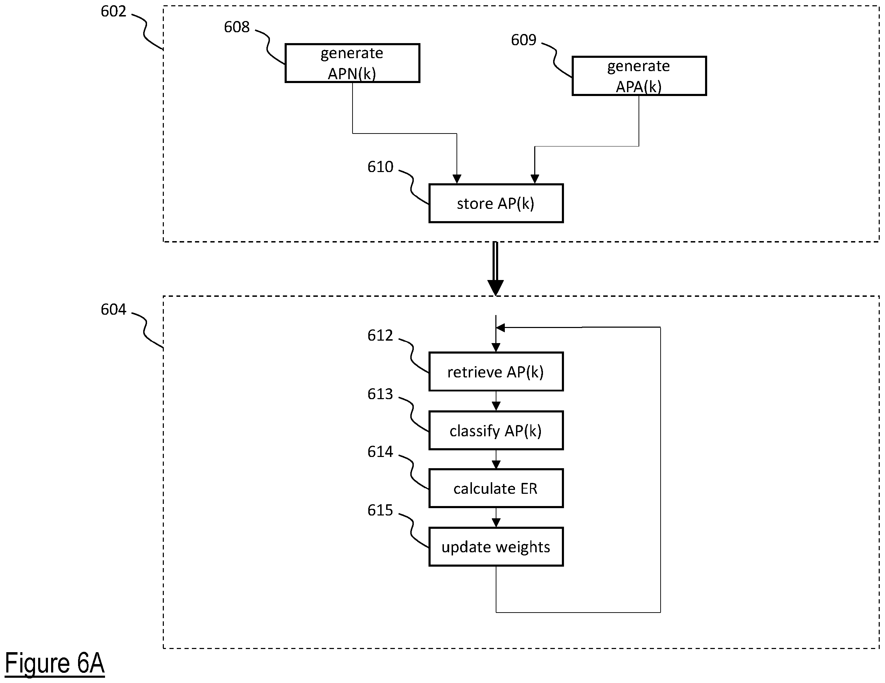

**Figures 6A-6D** show block diagrams illustrating procedures and operations performed by the configuration computing system **180** related to a method of training the neural network **320** (*i.e.,* a method of configuring the network by setting its weights) to optimize the ability of the neural network **320** to classify the acquired images *P(i)* in accordance with an embodiment of the present invention. Each block may correspond to one or more instructions or procedures executable to implement one or more specific logical functions on components of the configuration computing system **180** illustrated in **Figure 4**.

Referring to **Figure 6A**, the method of training the neural network **320** in accordance with an embodiment of the present invention comprises a procedure **602** aimed at generating training images *AP(k),* followed by a procedure **604** aimed at optimizing the weights of the neural network **320** (and thus generating corresponding configuration data **CD**), where such optimization is performed by exploiting the training images *AP(k)* created in the first procedure.

In accordance with one embodiment of the present invention, procedure **602** provides for generating non-artificial training images *APN(k)* (sub-procedure **608**), generating artificial training images *APA(k)* (sub-procedure **609**), and storing the training images *APN(k), APA(k)* in the training database **405** (block **610**). Sub-procedure **608** is performed by the image acquirer **415**, while sub-procedure **609** is performed by the image acquirer **420** and the image collector **430** and the artificial training image generator **440** of the configuration computing system **180.**

In accordance with a further embodiment of the present invention (not illustrated), sub-procedure **608** may not be performed. In this case, the training images AP(k) consist only of artificial training images APA(k). In other words, the concepts of the present invention also apply to the case where the neural network **320** is trained using only artificial training images.

In accordance with one embodiment of the present invention, procedure **604** is performed by the training engine **410** of the configuration computing system **180** by setting the weights of the neural network **320** in the following manner.

The training engine **410** reads the training database **405** to retrieve a stored training image AP(k) (which may be a non-artificial training image APN(k) (if present) or an artificial training image APA(k)) and the corresponding indication of the class C(j) of such image (block **612**). In this regard, in accordance with an exemplary and non-limiting embodiment of the present invention, such indication of the class C(j) is in the form of a classification array CT having the class probability value corresponding to the actual class C(j) of the image AP(k) being equal to 1, and the probability values corresponding to the other classes C(j) being equal to 0.

The training engine **410** provides the retrieved training image AP(k) to the neural network **320,** configured with weights derived from a current version of configuration data CD stored in the configuration database **330** (see **Figure 4),** and such image is classified by the neural network **320** with the generation of a corresponding classification array CA (block **613**).

The training engine **410** compares (e.g., by subtraction) the classification array CA (identifying the classification of the training image AP(k) performed by the neural network **320** being trained) with the classification array CT (indicative of the actual class of the training image AP(k)) and calculates (e.g., by means of an error function) a corresponding error value ER which quantifies the classification error committed by the neural network **320** (block **614**).

The training engine **410** then updates the weights of the neural network **320** based on the calculated error value ER (e.g., by a gradient descent method), thereby modifying the configuration data CD stored in the training database **405** (block **615**).

The sequence of operations corresponding to blocks **612 - 615** is then repeated several times, selecting each time from the training database **405** different training images AP(k).

In accordance with the embodiment of the invention just described, the weights of the neural network **320** are updated each time a new training image AP(k) has been classified by the neural network **320.** However, the concepts of the present invention also apply to cases where the weight update performed at block **615** is performed only after the operations corresponding to blocks **612 - 614** are performed for a plurality of training images AP(k) (e.g., for all or a portion of the training images AP(k) contained in the training database **405**).

In accordance with an embodiment of the present invention, in order to ensure sufficient generalization of the neural network **320,** i.e., to ensure correct functioning of the trained neural network **320** for the classification of generic images P(i) different from the training images AP(k) used in the training, a generalization verification procedure (not illustrated) is provided in addition to the procedure **604.** For example, the training images AP(k) can be divided into two groups, and the procedure **604** can be performed using only the training images AP(k) of the first group. The training images AP(k) of the second group can then be used by the verification procedure to verify the level of generalization achieved by the trained neural network **320.** If the verification has not given a positive outcome, i.e., if the neural network **320** has not been deemed to be sufficiently generalized, it is appropriate to repeat the training procedure **604** using different conditions.

It is emphasized that the procedure **604** described is only an example of how the weights of the neural network **320** can be optimized by exploiting the training images AP(k), and that the concepts of the present invention can also be applied by exploiting different procedures.

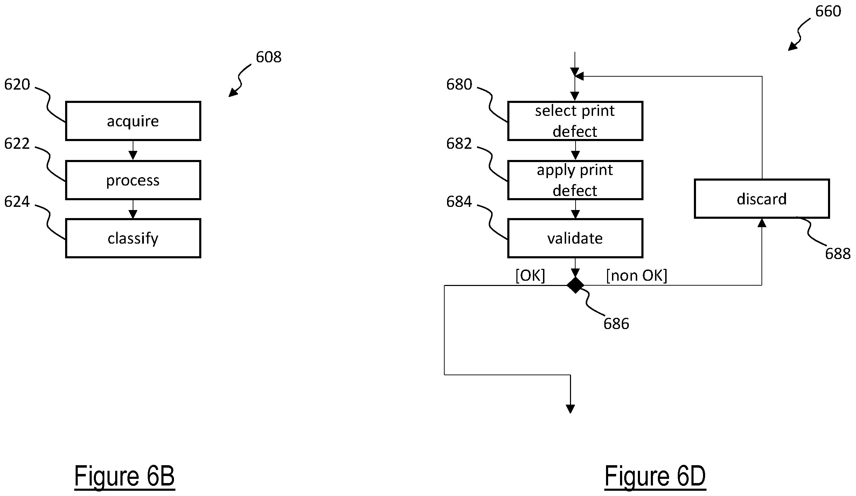

Sub-procedure **608** in accordance with an embodiment of the present invention for generating non-artificial training images APN(k) is illustrated in **Figure 6B.**

The first step of the sub-procedure **608** in accordance with an embodiment of the present invention provides for the acquisition by the image acquirer **415** of digital images of results of prints on substrates (block **620**). Such images are obtained by direct acquisitions via image acquisition sensors (e.g., cameras) of (portions of) substrates that have been subjected to digital printing operations. For example, such images are acquired immediately after the execution of the printing operations by image acquisition sensors located downstream of the printing module that performed the digital printing, such as the acquisition sensors **135(i)** illustrated in **Figure 1.**

In accordance with an embodiment of the present invention, the digital images acquired by the image acquirer **415** are selected manually, i.e., with the intervention of one or more operators, to ensure that a sufficient variety of cases are covered, involving different types of substrate and different images to be printed, and considering both printing results free of print defects and printing results comprising a sufficient variety of different print defects.

In accordance with one embodiment of the present invention, the non-artificial training images APN(k) are generated by the image acquirer **415** by applying (block **622**) processing algorithms on each of the acquired digital images to adapt the format (size, resolution) to a standard format chosen for all training images to be stored in the training database, and to introduce variations (*e.g.,* rotations and duplications) to make the training database larger.

In accordance with an embodiment of the present invention, the image acquirer **415** performs (block **624),** under the manual control of one or more operators, a classification of each of the non-artificial training images *APN(k)* into a corresponding one of the predefined classes *C(j).*

Sub-procedure **608** is significantly time consuming to perform, not only because of manual image classification by operators, but also because of the difficulty in finding authentic images of actual substrate print results containing specific print defects. Accordingly, in accordance with one embodiment of the present invention, the non-artificial training images *APN(k)* generated by the sub-procedure **608** are advantageously only a minor portion of the total training images *AP(k)* stored in training database **405.** For example, the non-artificial training images *APN(k)* may represent only 10%, 5%, or less (as previously noted, the non-artificial training images *APN(k)* may not be present at all) of the total training images *AP(k)* stored in the training database **405.**

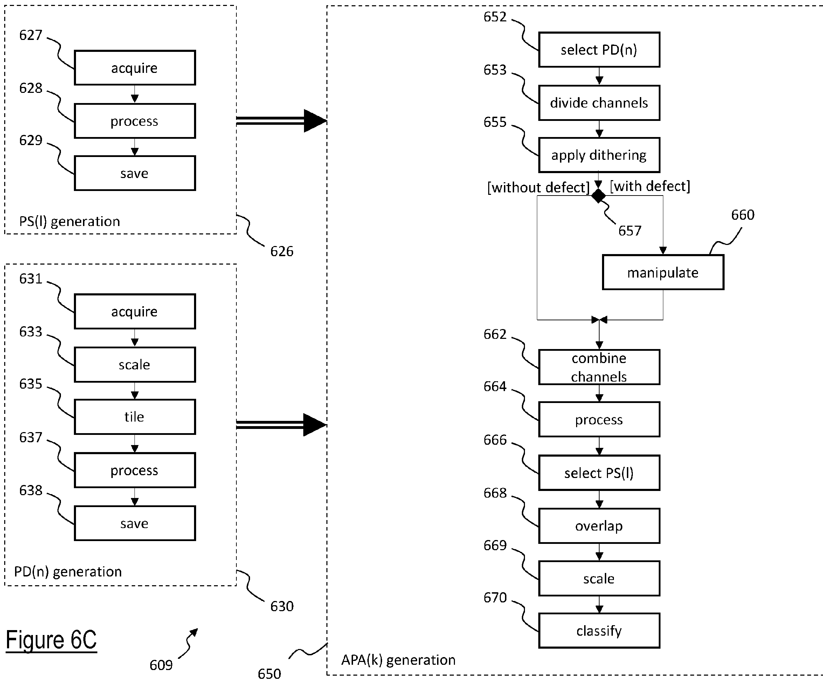

Sub-procedure **609** in accordance with one embodiment of the present invention for generating the artificial training images *APA(k)* is illustrated in **Figure 6C.**

In accordance with one embodiment of the present invention, sub-procedure **609** provides for generating a collection of substrate digital images *PS(l)* (which are stored in the substrate digital image database **425),** generating a collection of digital images of drawings to be printed *PD(n)* (which are stored in the database **435** of digital images of drawings to be printed), and generating the artificial training images *APA(k)* from a combination of the images *PS(l)* and *PD(n).*

In accordance with an embodiment of the present invention, the generation of substrate digital images *PS(l)* involves the following sequence of operations, globally identified with the reference **626.**

In accordance with an embodiment of the present invention, the image acquirer **420** acquires (block **627)** an image of a substrate (*e.g.*, a type of fabric, a type of wood panel, a type of paper, a type of glass...), for example obtained by means of a camera.

In accordance with an embodiment of the present invention, the image acquirer **420** generates a substrate digital image *PS(l)* from the acquired substrate image by applying processing algorithms to the latter to apply noise and/or apply brightness and contrast variations to increase visibility (block **628).**

In accordance with one embodiment of the present invention, the image acquirer **420** write accesses the substrate digital image database **425** to save the generated substrate digital image *PS(l)* (block **629).**

The sequence of operations **626** is then repeated to generate a plurality of substrate digital images *PS(l).*

In accordance with an embodiment of the present invention, the generation of digital images of drawings to be printed *PD(n)* involves the following sequence of operations, globally identified with the reference **630.**

In accordance with an embodiment of the present invention, the image collector **430** collects a digital image to be printed, representing a sample of a design to be printed, *i.e.,* to be applied by digital stamping, on a substrate (block **631).** The digital image to be printed may comprise designs generated by graphic editors or acquired from a camera, and may generally have any size and resolution.

In accordance with an embodiment of the present invention, the digital image to be printed is subjected by the image collector **430** to a scaling operation (block **633)** aimed at scaling the image to a resolution compatible with the resolution used during digital printing operations. For example, given a dimension $Dp = Dp(x) \cdot Dp(y)$ of the area occupied by the print result on the substrate, where $Dp(x)$ is the dimension (*e.g.,* in inches) of such area along the direction **X,** and $Dp(y)$ is the dimension (*e.g.,* in inches) of such area along the direction **Y,** the digital image to be printed is scaled to a resolution corresponding to the printing resolution *R(print)* used by the printing module **120.** The printing resolution *R(print)* may for example be between 150 and 1440 dpi. For example, given an area of the print result on the substrate having a dimension $Dp(x)$ equal to 5 inches and a dimension $Dp(y)$ equal to 50 inches, and a printing resolution *R(print)* equal to 600 dpi, the digital image to be printed is scaled so as to have a dimension of $Dp(x) R(print) \cdot Dp(y) R(print)$ = 3000 *pixels* · 30000 *pixels.*

In "multi-step" or "scanner" digital printing systems such as the digital printing system **100** illustrated in **Figure 1,** the printing of digital images is done incrementally where at each "step" a portion of the substrate **115** having a rectangular shape is printed having in general a length (along the direction **Y)** significantly greater than the height (along the direction **X).** Consequently, to acquire an image of the portion of the substrate printed in one step it is necessary to use a plurality of images $P(i)$ by means of a plurality of image acquisition sensors **135(i)** (aligned along the direction **Y).** The subdivision into a plurality of smaller images $P(i)$ also allows to reduce the amount of data to be processed, consequently reducing the computational load.

For this reason, in accordance with an embodiment of the present invention, the image collector **430** divides the scaled digital image to be printed into portions (tiles) by means of a "tiling" operation (block **635).** The size (in pixels) of the single tile $Dt = Dt(x) \cdot Dt(y)$ depends on the size (in pixels) $A = A(x) \cdot A(y)$ of the training images *APA(k)* with which the neural network is to be trained, and on the ratio between the printing resolution *R(print)* used by the print module **120** and the resolution *R(camera)* of the image acquisition sensors **135(i),** for example by means of the relation:

$$Dt(x) = A(x)\frac{R(print)}{R(camera)}$$

$$Dt(xy) = A(y)\frac{R(print)}{R(camera)}$$

The size $A$ (in pixels) of the artificial training images $APA(k)$ with which the neural network is to be trained can for example correspond to (or more generally, depend on) the size of the images $P(i)$ acquired by the image acquisition sensors **135(i)** in order to train the neural network using training images having a size corresponding to the size of the images that the neural network will actually have to classify during the monitoring of the printing operations. It should be emphasized, however, that the concepts of the present invention can also be applied to cases in which the size (in pixels) of the artificial training images $APA(k)$ with which the neural network is to be trained (and, therefore, of the tile) is different from the size (in pixels) of the images $P(i)$ acquired by the image acquisition sensors **135(i).**

The resolution $R(camera)$ of the image acquisition sensors **135(i)** used in the above relationship is expressed in dpi and is a function of the actual resolution (in pixels) of the image acquisition sensors **135(i)** and the relative position (*e.g.*, distance) between the image acquisition sensors **135(i)** and the framed lens.

For example, given a print resolution $R(print)$ equal to 600 dpi and a resolution $R(camera)$ of the image acquisition sensors equal to 150 dpi, and choosing to train the neural network with images having a size $A(x) \cdot A(y)$ equal to 480 pixels by 480 pixels, the size (in pixels) of the single tile $Dt$ would be equal to 1920 pixels by 1920 pixels.

In accordance with an embodiment of the present invention, the image collector **430** generates one or more digital images of drawings to be printed $PD(n)$ from each newly created tile by applying to each tile processing algorithms aimed at performing one or more of rotation, flipping, color tone change and similar operations (block **637**). The application of such processing algorithms is aimed at enriching the diversity of the images $PD(n)$ that will be used to generate the artificial training images $APA(k)$.

In accordance with an embodiment of the present invention, the image collector **430** write accesses the database **435** of digital images of drawings to be printed to save the one or more generated digital images of drawings to be printed $PD(n)$ (block **638**).

The sequence of operations **630** is then repeated to generate a plurality of digital images of drawings to be printed $PD(n)$ by exploiting a plurality of acquired digital images to be printed.

In accordance with an embodiment of the present invention, the generation of the artificial training images $APA(k)$ from a combination of the images $PS(l)$ and $PD(n)$ involves the following sequence of operations, globally identified with the reference **650**.

In accordance with one embodiment of the present invention, the artificial training image generator **440** reads the database **435** of digital images of drawings to be printed to select one of the digital images of drawings to be printed $PD(n)$ (block **652**).

In accordance with one embodiment of the present invention, the artificial training image generator **440** splits (block **653**) the selected digital image of drawing to be printed $PD(n)$ into multiple color channels (*e.g.,* four color channels in a CMYK color scheme). Each color channel comprises a grayscale version of the digital image of drawing to be printed $PD(n)$ that reflects the color contribution of the channel to the digital image of drawing to be printed $PD(n)$.

In accordance with one embodiment of the present invention, the artificial training image generator **440** processes (block **655**) each color channel of the digital image of drawing to be printed $PD(n)$ using a dithering algorithm to create a color depth. Non-exhaustive examples of such algorithms include the Floyd-Steinberg algorithm, the Ordered algorithm, the Jarvis algorithm, and the precomputed matrix algorithm.

In accordance with an embodiment of the present invention, the artificial training image generator **440** generates a set of artificial training images $APA(k)$ comprising both training images identifying printing results free of print defects - and therefore belonging to the class $C(0)$ - and training images identifying printing results containing print defects - and therefore belonging to the other classes $C(1)$ , $C(2)$, ...

In accordance with an embodiment of the present invention, the subdivision of the artificial training images $APA(k)$ is uniform, with a number of artificial training images $APA(k)$ being substantially equal for each of the predefined classes $C(j)$. For example, in order to train the neural network to identify only one type of print defect corresponding to the predefined class $C(1),$ the artificial training images $APA(k)$ generated by the artificial training image generator **440** may comprise approximately 50% (e.g., 40-60%) of artificial training images $APA(k)$ free of print defects (and thus corresponding to the class $C(0))$ and approximately 50% *(e.g., 60-40%)* of artificial training images $APA(k)$ containing such a type of print defect (and thus corresponding to the class $C(1)$. As another example, in order to train the neural network to identify three types of print defects corresponding to the predefined classes $C(1), C(2), C(3),$ the artificial training images $APA(k)$ generated by the artificial training image generator **440** may comprise approximately 25% of artificial training images $APA(k)$ free of print defects (and thus corresponding to class $C(0)),$ approximately 25% of artificial training images $APA(k)$ containing a first type of print defect (corresponding to class $C(1)),$ approximately 25% of artificial training images $APA(k)$ containing a second type of print defect (corresponding to class *C(2)),* and approximately 25% of artificial training images *APA(k)* containing a first type of print defect (corresponding to class *C(3)).* The concepts of the present invention may however be applied to cases where the subdivision of the artificial training images *APA(k)* is not is uniform, *i.e.,* with a number of artificial training images *APA(k)* that is not equal for each of the predefined classes *C(j).*

In view of this, in accordance with an embodiment of the present invention, the artificial training image generator **440** determines whether the digital image of drawing to be printed *PD(n)* is to be used to generate an artificial training image *APA(k)* containing a print defect or not (decision block **657).**

In accordance with an embodiment of the present invention, if the digital image of drawing to be printed *PD(n)* is to be used to generate an artificial training image *APA(k)* containing a print defect, the artificial training image generator **440** digitally manipulates (block **660)** one or more of the color channels of the digital image of drawing to be printed *PD(n)* by means of an appropriate digital manipulation procedure so as to introduce a specific print defect therein. In accordance with an embodiment of the present invention, if instead the digital image of drawing to be printed *PD(n)* is to be used to generate an artificial training image *APA(k)* free of print defects, such digital manipulation procedure is not performed.

At this point, in accordance with an embodiment of the present invention, the artificial training image generator **440** combines (block **662)** the color channels of the digital image of drawing to be printed *PD(n)* (optionally digitally manipulated to include a print defect) to recompose the color digital image of drawing to be printed *PD(n).* In accordance with an embodiment of the present invention, the recombination is performed by one of the known channel mixing techniques. In the case of black and white prints, this step may be skipped.

In accordance with an embodiment hereof, the artificial training image generator **440** applies to the digital image of the drawing to be printed *PD(n)* (possibly digitally manipulated to include a print defect) further processing algorithms aimed at varying brightness and contrast (block **664).** Unlike the case in which the processing algorithms were applied for the generation of the digital images of drawings to be printed *PD(n)* (block **637),** it is important that the processing algorithms used in this phase do not include rotations, scaling or cropping in order not to lose information relating to the possible print defect that has been added or to avoid creating images containing print defects that are not possible in reality.

In accordance with an embodiment of the present invention, the artificial training image generator **440** read accesses the substrate digital image database **425** to select (block **666)** a specific digital substrate image *PS(1)* based on the type of digital printing to be monitored (printing on a substrate comprising a particular fabric, printing on a substrate of a particular type of paper...).

In accordance with an embodiment of the present invention, the artificial training image generator **440** combines, for example by superposition, the digital image of the drawing to be printed *PD(n)* (possibly digitally manipulated to include a print defect) with the selected substrate digital image *PS(l)* (block **668).** In this way, the image resulting from the combination (superposition) of the two images is advantageously made similar to an image that would have been obtained by acquiring (for example by camera) a portion of the substrate on which a digital printing operation was performed to print that specific digital image of the drawing to be printed *PD(n).*

In accordance with an embodiment of the present invention, the artificial training image generator **440** generates a corresponding artificial training image *APA(k)* by scaling (block **669)** the image resulting from the combination of the images *PD(n), PS(l)* so as to bring it to the size (in pixels) $A = A(x) \cdot A(y),$ for example corresponding to the resolution of the image acquisition sensors **135(i),** so as to make such image compatible with the dimensions of the images *P(i)* acquired by the image acquisition sensors **135(i)** .

In accordance with an embodiment of the present invention, the artificial training image generator **440** automatically classifies (block **670)** the generated artificial training image *APA(k)* based on the operations performed previously:

- if the digital manipulation corresponding to block **660** has not been performed, and therefore no print defect has been introduced, the artificial training image *APA(k)* is classified into class *C(0)* corresponding to an absence of print defects;
- if the digital manipulation corresponding to block **660** has been performed to introduce a particular print defect corresponding to a specific predefined class *C(j),* the artificial training image *APA(k)* is classified into the class *C(j)* corresponding to the presence of a print defect of that type.

In accordance with one embodiment of the present invention, the sequence of operations **650** is then reiterated to generate additional artificial training images *APA(k),* using a different digital image of drawing to be printed *PD(n),* and/or introducing via digital manipulation a different type of print defect, and/or combining the digital image of drawing to be printed *PD(n)* with a different substrate digital image *PS(l).*

The digital manipulation procedure performed at block **660** for introducing a print defect into a digital image of drawing to be printed *PD(n)* (or color channel thereof) in accordance with an embodiment of the present invention is illustrated in **Figure 6D.**

In accordance with an embodiment of the present invention, the artificial training image generator **440** selects (block **680)** a type of print defect to be introduced into the digital image of drawing to be printed *PD(n)* among the classifiable print defects (*i.e.,* among the print defects identified in one of the predefined classes *C(1), C(2), ...).* The choice of the particular type of print defect to be introduced may depend on the type of digital printing system **100** to be monitored (for example, on the typology/technology of the printing module **120),** and/or on the type of digital printing performed.

At this point, in accordance with an embodiment of the present invention, the artificial training image generator **440** manipulates the digital image of drawing to be printed *PD(n)* (or just one of the corresponding color channels) to introduce the print defect of the selected type (block **682).**

In accordance with an embodiment of the present invention, in order to introduce a line defect (corresponding to the predefined class *C(1))* into the digital image of drawing to be printed *PD(n),* the artificial training image generator **440** manipulates one or more color channels of the digital image of drawing to be printed *PD(n)* to remove from each of them a corresponding set of pixels, *e.g.,* a line along a direction corresponding to the direction **X.** In this way, when the image is recomposed by overlapping the color channels, a line is created in which a color component is absent.

In accordance with an embodiment of the present invention, in order to introduce a color misalignment defect (corresponding to the predefined class *C(2))* in the digital image of drawing to be printed *PD(n),* the artificial training image generator **440** manipulates one or more color channels of the digital image of drawing to be printed *PD(n)* to translate them (by an amount of pixels) with respect to the other color channels. In this way, when the image is recomposed by merging the color channels, an inconsistency effect is created on the edges of the shapes represented in the image due to the altered overlapping of the color channels.

In accordance with an embodiment of the present invention, in order to introduce a stain defect (corresponding to the predefined class *C(3))* into the digital image of drawing to be printed *PD(n),* the artificial training image generator **440** manipulates one or more color channels of the digital image of drawing to be printed *PD(n))* by superimposing thereon one or more images representing one or more stains.

In accordance with an embodiment of the present invention, in order to introduce a blur defect (corresponding to the predefined class *C(4))* into the digital image of drawing to be printed *PD(n),* the artificial training image generator **440** manipulates one or more color channels of the digital image of drawing to be printed *PD(n)* by means of a blurring algorithm.

In accordance with an embodiment of the present invention, in order to introduce an incorrect repeat defect (corresponding to the predefined class *C(5))* in the digital image of drawing to be printed *PD(n)* when such image comprises repeated copies of the same single image, the artificial training image generator **440** manipulates one or more color channels of the digital image of drawing to be printed *PD(n)* to alter the position of at least one such copy relative to the position of the other copies.

In accordance with an embodiment of the present invention, in order to introduce a step defect (corresponding to the predefined class *C(6))* in the digital image of drawing to be printed *PD(n),* the artificial training image generator **440** manipulates one or more color channels of the digital image of drawing to be printed *PD(n)* to divide it into a first portion and a second portion, and to move the first portion so as to partially overlap the second portion or so as to create a gap between the two portions. This particular type of print defect is introduced only if the digital printing system **100** to be monitored comprises a printing module **120** that operates in "multi-step" mode.

In accordance with an embodiment of the present invention, after having manipulated the digital image of the drawing to be printed *PD(n),* the artificial training image generator **440** performs a validation process (block **684),** specific for each type of print defect that can be introduced, to verify whether such print defect is actually visible or not. In this way, the identification of false positives due to a classification in one of the classes *C(1), C(2), ...* of an image in which the print defect is not actually visible is advantageously avoided.

In view of this, in accordance with an embodiment of the present invention, the artificial training image generator **440** determines whether the manipulated digital image of drawing to be printed *PD(n)* is validated or not (decision block **686).**

In accordance with an embodiment of the present invention, if the artificial training image generator **440** has determined that the manipulated digital image of drawing to be printed *PD(n)* cannot be validated, the artificial training image generator **440** discards (block **688)** such manipulated digital image of drawing to be printed *PD(n),* and tries at least one more time to manipulate the digital image of drawing to be printed *PD(n)* (return to block **682).**

In accordance with one embodiment of the present invention, if the artificial training image generator **440** has determined that the manipulated digital image of drawing to be printed *PD(n)* is validated, the digital manipulation procedure **660** is successfully terminated.

In accordance with an embodiment of the present invention, the sub-procedure **609** for generating artificial training images *APA(k)* is used for training multiple different neural networks **320,** each used to identify a respective print defect (corresponding to a specific class *C(j))* among the available print defects. In this case, such sub-procedure is applied to each digital image of drawing to be printed *PD(n)* multiple times, each time manipulating it to introduce a different type of print defect corresponding to a different class *C(j).*

In accordance with another embodiment of the present invention, the sub-procedure **609** for generating artificial training images *APA(k)* is used to train a single neural network **320** used to identify different types of print defects (corresponding to more than one class C*(j)).* In this case, a randomly assigned type of print defect will be introduced to each new digital image of drawing to be printed *PD(n)* to be manipulated, so as to create a homogeneous distribution of types of print defects present in the training database **405.**

The artificial training images *APA(k)* generated in accordance with the described embodiments of the present invention allow a fast construction of a complete and efficient training database **405,** which allows the training of one or more robust neural networks **320** without first having to perform long and inefficient manual operations that would be necessary if one wanted to build such a training database using only digital images obtained from the acquisition of results from real printing processes. As already mentioned above, a manual process would in fact require an excessive amount of time, and a corresponding waste of electrical energy and inks, since, given the rarity of the occurrence of print defects in real cases, it would be necessary to collect countless images by acquiring printing results from printing processes continued for very large time intervals.

The monitoring unit **130,** and in particular the monitoring computing system **170** using the neural network **320** configured with the configuration data **CD** obtained with the training procedure in accordance with the embodiments described, is particularly advantageous, as it allows for very accurate and efficient monitoring of printing operations, but without requiring active intervention by operators specifically trained for monitoring specific types of printing production.

Applicant has experimentally verified the accuracy of a neural network trained using the training method according to the embodiments described herein.

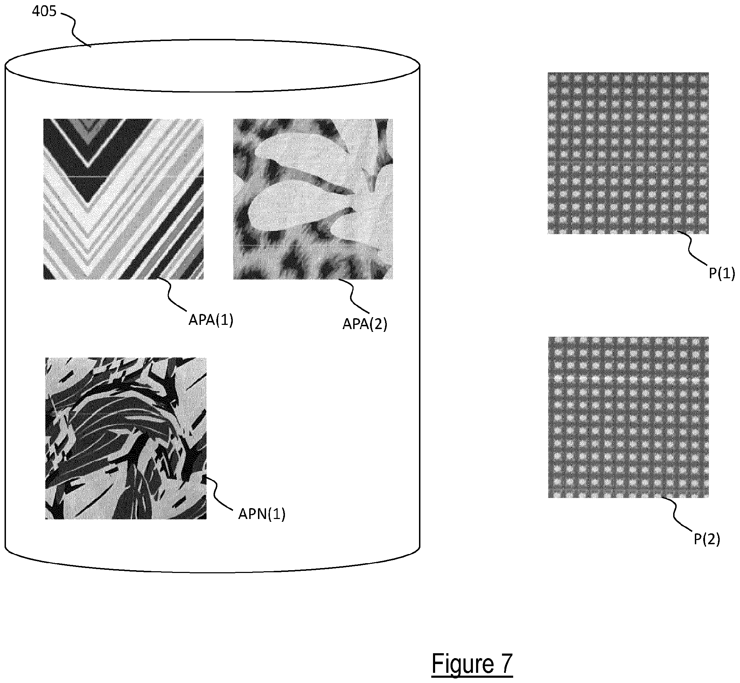

Referring specifically to **Figure 7,** the Applicant has verified that a neural network that has been trained to recognize print step defects using as training images *AP(k):*

artificial training images *APA(k)* including (also) images **APA( 1)** and **APA(2)** (obtained by manipulating images to introduce a step defect), and
- non-artificial training images *APN(k)* including (also) image **APN(1)** (obtained by acquiring an image of a real printing result including an actual step defect),

was able to correctly classify images **P(1)** and **P(2)** (obtained from the acquisition of real printing results) as images including a step defect.

It should be noted that the images **P(1)** and **P(2)** that were correctly classified by the neural network of this experimental example were not present in any way among the training images *AP(k)* used for training the neural network itself. In other words, the neural network was trained with a degree of generalization such as to allow it to correctly classify even images that were very different from those used during training.

Naturally, in order to meet local and specific requirements, a person skilled in the art may apply various logical and/or physical modifications and alterations to the invention described above. More specifically, while the present invention has been described with a certain degree of particularity with reference to its preferred embodiments, it should be understood that various omissions, substitutions and modifications in form and details, as well as other embodiments, are possible. In particular, various embodiments of the invention may also be practiced without the specific details set forth in the foregoing description to provide a more thorough understanding thereof; conversely, well-known functions may have been omitted or simplified so as not to burden the description with unnecessary detail.

**Claims**

1.  A method for training a neural network model **(320)** for use in print defect monitoring applications in a substrate printing process, said method comprising, under the control of a computing system **(180):**

    - providing **(630)** to the computing system a plurality of digital images to be printed;
    - providing **(626)** to the computing system one or more substrate digital images each representative of a corresponding substrate;
    - generating **(650),** by the computing system, a plurality of first training images representative of defect-free prints, said generating the first training images comprising combining **(668)** each of a group of said digital images to be printed with one of the substrate digital images;
    - generating **(650),** by the computing system, a plurality of second training images representing prints each containing at least one print defect, said generating the second training images comprising carrying out the following operations a), b) on each of a group of said digital images to be printed:

        a) digitally manipulating **(660)** said digital image to be printed to introduce into it at least one graphic alteration representing the corresponding at least one print defect;
        b) combining **(668)** the digitally manipulated digital image to be printed with one of the substrate digital images;

    - training **(604),** by the computing system, said neural network model on the basis of said first training images and said second training images to optimize the capability of said neural network model to classify the first training images as defect-free, and to classify the second training images as containing at least one defect.

2.  The method of claim 1, wherein said digitally manipulating **(660)** said digital image to be printed to introduce into it at least one graphic alteration representing the corresponding at least one print defect comprises at least one of:

- superimposing **(682)** onto said digital image to be printed at least one image representative of a stain;
- blurring **(682)** said digital image using a blurring algorithm;
- dividing **(682)** said digital image into a first portion and a second portion, and moving **(682)** the first portion so as to overlap it at least partially with the second portion, or so as to create a gap between the first portion and the second portion.

3. The method of claim 1 or claim 2, wherein said digital images to be printed comprise repetitive digital images to be printed each comprising a plurality of copies of a same single image, said digitally manipulating **(660)** said digital image to be printed to introduce into it at least one graphic alteration including:

- altering **(682),** in each of said repetitive digital images to be printed, the position of at least one of said copies with respect to the position of the other copies.

4. The method of any of the preceding claims, wherein:

- the method further comprises, under the control of the computing system, extracting **(633)** from each digital image to be printed corresponding color channels;
- said operation a) includes:

  - digitally manipulating **(660)** each color channel of said digital image to be printed to introduce into it at least one graphic alteration representing the corresponding at least one print defect;
  - combining **(668)** the digitally manipulated color channels together to obtain the corresponding digitally manipulated digital image to be printed.

5. The method of claim 4, wherein said digitally manipulating **(660)** said digital image to be printed to introduce at least one graphic alteration into it comprises at least one of:

- erasing **(682)** a corresponding set of pixels from at least one color channel of said digital image to be printed;
- translating **(682)** one or more of the color channels of said digital image to be printed with respect to the other color channels of said image so as to create a misalignment between said one or more of the color channels and said other color channels.

6. The method of any of the preceding claims, wherein said method comprises, under the control of the computing system:

- scaling **(633)** said digital images to be printed to a first resolution corresponding to a printing resolution used for printing said digital images to be printed on a substrate;
- generating **(650)** said first training images and said second training images using said digital images to be printed scaled to said first resolution;
- scaling **(669)** said first training images and said second training images generated to a second resolution, said training **(604)** said neural network model being executed, by the computing system, on the basis of said first training images and said second training images at the second resolution.

7. The method of any of the previous claims, wherein:

- said at least one print defect includes a single type of print defect;
- said first training images comprise a first number of first training images;
- said second training images comprise a second number of second training images representative of prints each containing at least one print defect of said single type of print defect;
- said first number corresponds to 40%-60% of a total number of training images used by the computing system for training said neural network model.

8. The method of any of the preceding claims, wherein:

- said at least one print defect includes a plurality of different types of print defects;
- said first training images comprise a first number of first training images;
- said second training images comprise for each type of print defect of said plurality a corresponding second number of second training images representative of prints each containing at least one print defect of said type of print defect;
- said first number and said second numbers are substantially the same.

9. The method of any of the previous claims, wherein said training **(604),** by the computing system, said neural network model further comprises:

- including **(608)** in said first training images digital images corresponding to camera acquisitions of images of prints free of print defects;
- including **(608)** in said second training images digital images corresponding to camera acquisitions of images of prints containing at least one print defect.

10. A computer program **(400)** configured to cause a computing system **(180)** execute the method for training a neural network model **(320)** according to claims 1 to 9 when the computer program is executed on the computing system **(180).**

11. A computer program product comprising one or more readable memory mediums having program instructions collectively memorized on the readable memory mediums, the program instructions being readable by a computing system to cause the computing system execute the method according to any of claims 1 to 9.

12. A computing system **(180)** configured to execute the method for training a neural network model **(320)** according to claims 1 to 9.

13. A method for monitoring print defects in a substrate printing process, the method comprising:

- receiving, by a monitoring computing system **(170),** an image of a print product obtained by a printing process on a substrate, said image being acquired by means of one or more image acquisition sensors;
- using **(509),** by the monitoring computing system, a neural network model **(320)** trained in accordance with any of the previous claims to classify said acquired image;
- evaluating **(509),** by the monitoring computing system, the presence of print defects in the print product on the basis of a classification of said acquired image carried out by means of said neural network model;
- providing **(520, 525, 530)** an outcome of said evaluation.

14. A computer program **(300)** configured to cause a computing system **(170)** execute the method for monitoring print defects according to claim 13 when the computer program is executed on the computing system **(170).**

15. A computer program product comprising one or more readable memory mediums having program instructions collectively memorized on the readable memory mediums, the program instructions being readable by a computing system to cause the computing system execute the method according to any

of claim 13.

Figure 1

EP 4 621 734 A1

μP  220

ROM  230

RAM  240

210

MASS MEMORY  250

PERIPHERALS  260

Figure 2

Figure 3

Figure 4

EP 4 621 734 A1

Figure 5

Figure 6A

EP 4 621 734 A1

608

620 acquire

622 process

624 classify

**Figure 6B**

660

680 select print defect

682 apply print defect

684 validate

[OK]   [non OK]

discard

688

686

**Figure 6D**

EP 4 621 734 A1

## Figure 6C

609

**PS(I) generation** — 626

- 627 acquire
- 628 process
- 629 save

**PD(n) generation** — 630

- 631 acquire
- 633 scale
- 635 tile
- 637 process
- 638 save

**APA(k) generation** — 650

- 652 select PD(n)
- 653 divide channels
- 655 apply dithering

[without defect] [with defect]

657

- 660 manipulate
- 662 combine channels
- 664 process
- 666 select PS(I)
- 668 overlap
- 669 scale
- 670 classify

Figure 7

EP 4 621 734 A1

Europäisches
Patentamt

European
Patent Office

Office européen
des brevets

**EUROPEAN SEARCH REPORT**

**Application Number**

EP 25 16 4361

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VALENTE AUGUSTO C ET AL: "Print Defect Mapping with Semantic Segmentation", 2020 IEEE WINTER CONFERENCE ON APPLICATIONS OF COMPUTER VISION (WACV), IEEE, March 2020 (2020-03), pages 3540-3548, XP033771118, DOI: 10.1109/WACV45572.2020.9093470 * abstract * * section "1. Introduction" * * section "3.1. Synthetic data"; page 3; figure 4 * * section "3.4. Generating training data"; page 4 * * section "3.5. Training pipeline"; page 5 * ----- | 1-15 | INV. G06V10/764 G06T7/00 G06V10/774 G06V10/82 G06V10/98 |
| A | XIANG SHENG ET AL: "Robust defect detection in 2D images printed on 3D micro-textured surfaces by multiple paired pixel consistency in orientation codes", IET IMAGE PROCESSING, IET, UK, vol. 14, no. 14, December 2020 (2020-12), pages 3373-3384, XP006094158, ISSN: 1751-9659, DOI: 10.1049/IET-IPR.2019.0724 * abstract * * Section "5 Experiments"; page 7 - page 9; figures 14-18 * ----- | 1-15 | TECHNICAL FIELDS SEARCHED (IPC) G06V G06T |

-/--

The present search report has been drawn up for all claims

| Place of search | Date of completion of the search | Examiner |
|---|---|---|
| The Hague | 19 May 2025 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 16 4361

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A | Anonymous: "How to add texture to an image in Photoshop in 7 steps - Adobe", , 5 November 2023 (2023-11-05), XP093206091, Retrieved from the Internet: URL:https://web.archive.org/web/2023110513 5457/https://www.adobe.com/products/photos hop/textures.html [retrieved on 2024-09-18] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 19 May 2025 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)